# EUROPEAN PATENT APPLICATION

(11) **EP 3 933 211 A1**
(43) Date of publication of application: **05.01.2022**
(21) Application number: 20916232.0
(22) Date of filing: 01.05.2020
(51) Int. Cl.: F15B 11/00

(54) **FASTENING BOLT AND HYDRAULIC CONTROL DEVICE**

(71) Applicant: Pacific Industrial Co., Ltd., Ogaki-shi, Gifu 503-8603 (JP)
(72) Inventor: KANAMORI, Kazuhiro, Ogaki-shi, Gifu 503-8603 (JP)
(74) Representative: Kramer Barske Schmidtchen Patentanwälte PartG mbB
(86) International application number: PCT/JP2020/018470
(87) International publication number: WO 2021/220518

(57) **Abstract**

It is desired to downsize a plate on each of which a hydraulic integrated circuit is formed in an automatic transmission or a continuously variable transmission.

A passage bolt 10A according to the present disclosure has a communication passage 15 through which hydraulic oil can flow. The communication passage 15 has a trunk passage 16 extending along a center of the passage bolt 10A and a lower branch passage 17B and upper branch passage 17A that branch laterally from the trunk passage 16 and open to a side surface of the passage bolt 10A. When the passage bolt 10A is attached to an oil passage body 101, a lower end portion of the trunk passage 16 communicates with an oil passage 111 of a third oil passage plate 104, and the lower branch passage 17B and the upper branch passage 17A communicate with an oil passage 111 of a second oil passage plate 103 and the oil passage 111 of the third oil passage plate 104, respectively.

## Description

### TECHNICAL FIELD

The present disclosure relates to a fastening bolt and a hydraulic control device in which the fastening bolt is used.

### BACKGROUND ART

Conventionally, there is known a fastening bolt that fixes a plurality of stacked plates on which a hydraulic integrated circuit for hydraulically controlling an automatic transmission or a continuously variable transmission is formed (refer to Patent Literature 1, for example).

### CITATIONS LIST

### PATENT LITERATURE

Patent Literature 1: Japanese Patent Application Laid-Open No. 2019-158123

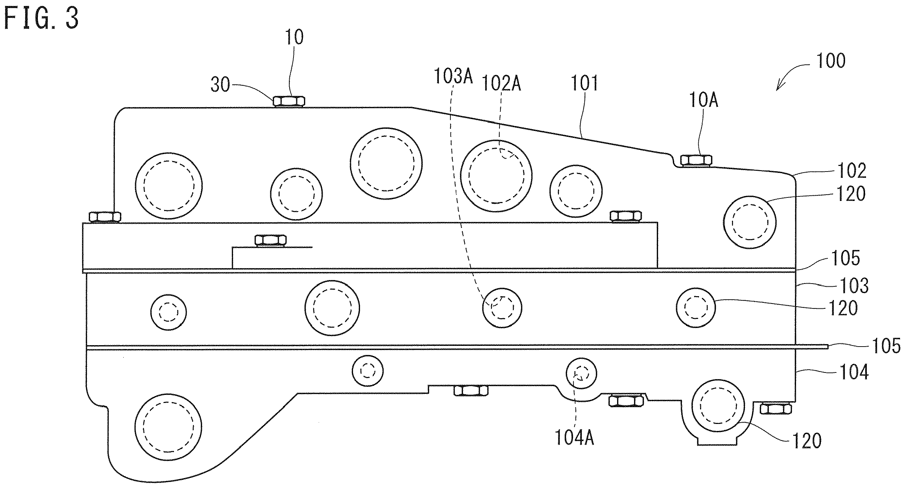

### (Paragraph [0026], FIG. 3, or the like)

### SUMMARY OF INVENTION

### TECHNICAL PROBLEMS

It is desired to downsize the plates on each of which the hydraulic integrated circuit is formed in the automatic transmission or the continuously variable transmission.

### SOLUTIONS TO PROBLEMS

A fastening bolt according to the present disclosure is a fastening bolt that fixes a plurality of stacked plates on each of which a hydraulic integrated circuit for hydraulically controlling an automatic transmission or a continuously variable transmission is formed, the fastening bolt including a communication passage that communicates between the hydraulic integrated circuits among the plurality of plates.

### BRIEF DESCRIPTION OF DRAWINGS

FIG. 1 is a conceptual diagram of a hydraulic control device according to a first embodiment.
FIG. 2 is a conceptual diagram of a transmission.
FIG. 3 is a side view of an oil passage body.
FIG. 4 is a perspective view of the oil passage body.
FIG. 5 is a plane cross-sectional view of an oil passage plate.
FIG. 6 is a cross-sectional view of a vicinity of a passage bolt of the oil passage body.
FIG. 7 is a cross-sectional view of a vicinity of a passage bolt of an oil passage body according to a second embodiment.
FIG. 8 is a cross-sectional view of a vicinity of a passage bolt of an oil passage body according to a third embodiment.
FIG. 9 is an image diagram of a hydraulic control device.
FIG. 10 is a cross-sectional view of a vicinity of a passage bolt of an oil passage body according to a fourth embodiment.
FIG. 11 is a perspective view of a lid.
FIG. 12 is a cross-sectional view of a vicinity of a passage bolt of an oil passage body according to a fifth embodiment.
FIG. 13 is a perspective view of a spring retaining member.
FIG. 14 is a cross-sectional view of a vicinity of a passage bolt of an oil passage body according to a modification.
FIG. 15 is a cross-sectional view of a vicinity of a passage bolt of an oil passage body according to a sixth embodiment.
FIG. 16 is a cross-sectional view of a vicinity of a passage bolt of an oil passage body according to a modification.
FIG. 17 is a cross-sectional view of a vicinity of a passage bolt of an oil passage body according to a seventh embodiment.
FIG. 18 is an image diagram of a hydraulic control device.
FIG. 19 is a cross-sectional view of a vicinity of a passage bolt of an oil passage body according to an eighth embodiment.
FIG. 20 is a cross-sectional view of a vicinity of a passage bolt of an oil passage body according to a ninth embodiment.
FIG. 21 is a cross-sectional view of a vicinity of a passage bolt of an oil passage body according to a tenth embodiment.
FIG. 22 is a cross-sectional view of a vicinity of a passage bolt of an oil passage body according to a modification.
FIG. 23 is a cross-sectional view of a vicinity of a passage bolt of an oil passage body according to a modification.
FIG. 24 is a cross-sectional view of a vicinity of a passage bolt of an oil passage body according to a modification.
FIG. 25 is a cross-sectional view of a vicinity of a passage bolt of an oil passage body according to a modification.

### DESCRIPTION OF EMBODIMENTS

### [First embodiment]

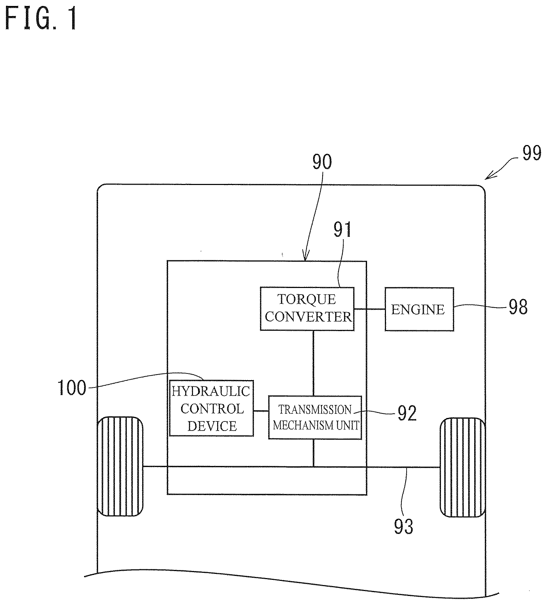

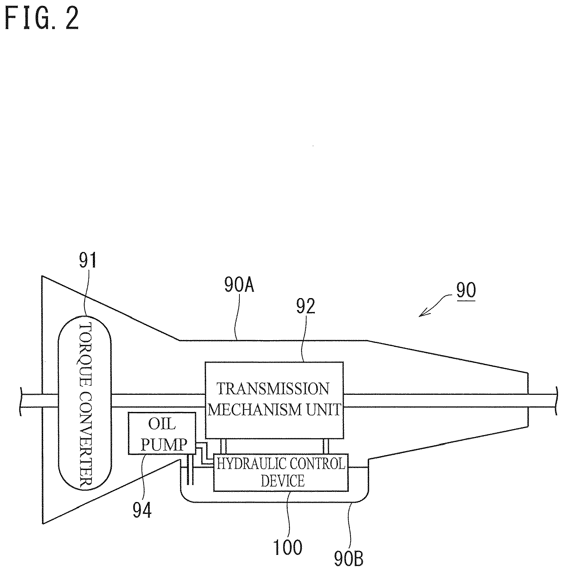

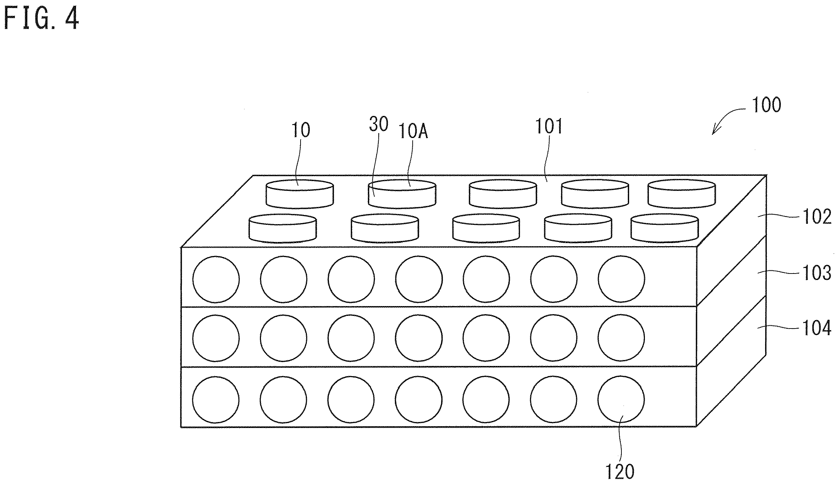

Hereinafter, a passage bolt 10A (corresponding to a "fastening bolt" in the claims) and a hydraulic control device 100 according to the present embodiment will be described with reference to FIGS. 1 to 6. As illustrated in FIG. 1, the hydraulic control device 100 is included in a transmission 90, such as an automatic transmission (AT) or continuously variable transmission (CVT), which is mounted on a vehicle 99, in order to hydraulically control a transmission mechanism unit 92, and the passage bolt 10A (refer to FIG. 3) is used in the hydraulic control device 100. Specifically, as illustrated in FIGS. 1 and 2, the transmission 90 coaxially has a torque converter 91 which is connected to a crankshaft (not illustrated) of an engine 98, and the transmission mechanism unit 92 which changes and outputs speed of rotation received from the torque converter 91, in a case 90A, and has the hydraulic control device 100 below the transmission mechanism unit 92.

It should be noted that the transmission mechanism unit 92 is configured to change speed in stages by using a planetary gear mechanism in an automatic transmission (AT) for example, and is configured to change speed steplessly with a set of pulleys around which a metal belt is wound in a continuously variable transmission (CVT), for example. Furthermore, output of the transmission mechanism unit 92 is transmitted to a drive shaft 93 (refer to FIG. 1) via an unillustrated gear mechanism, or the like.

As illustrated in FIG. 2, the hydraulic control device 100 is immersed in hydraulic oil stored in an oil pan 90B covering a lower surface opening of the case 90A. The hydraulic control device 100 adjusts pressure of hydraulic oil sucked and pumped from inside of the oil pan 90B by an oil pump 94 and sends the hydraulic oil to the transmission mechanism unit 92.

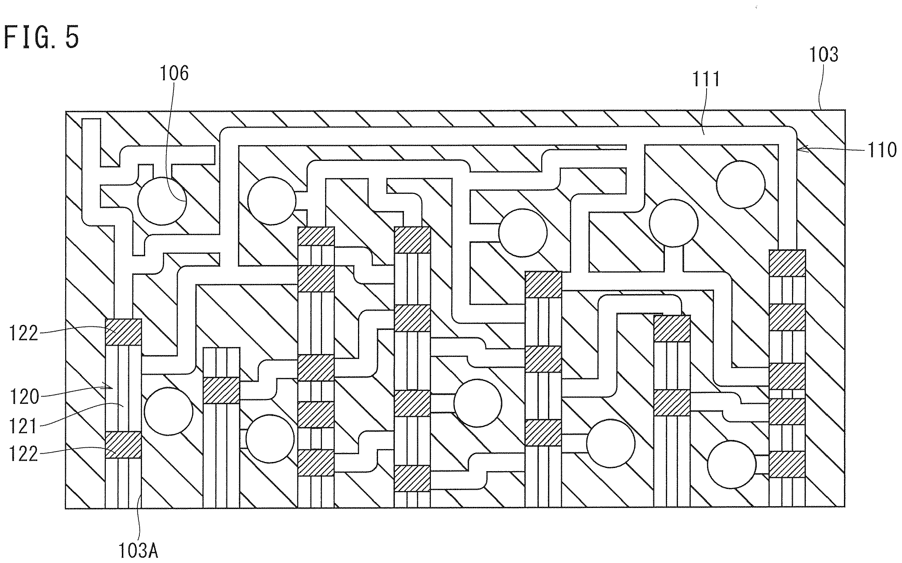

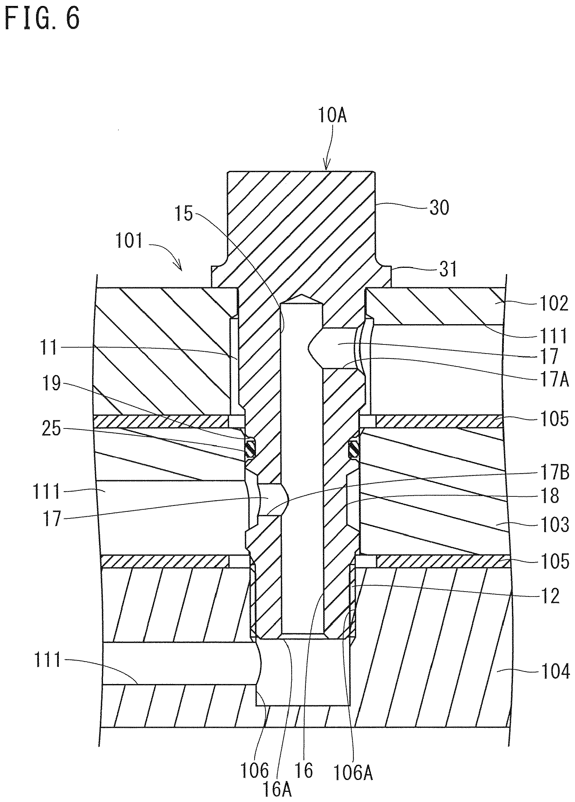

As illustrated in FIGS. 3 to 6, the hydraulic control device 100 includes an oil passage body 101 provided with a plurality of integrated oil passages 111, and a plurality of drive valves 120 attached to the oil passage body 101 and capable of connecting the oil passages 111 to each other and disconnecting the oil passages 111 from each other. Hereinafter, an aggregate of the integrated oil passages 111 is referred to as a hydraulic integrated circuit 110. The oil passage body 101 is configured by stacking first to third oil passage plates 102 to 104 (the second oil passage plate 103 is exemplified in FIG. 5) on each of which a hydraulic integrated circuit 110 is formed, and two separate plates 105 sandwiched between each of the oil passage plates 102 to 104. The hydraulic integrated circuit 110 of each of the oil passage plates 102 to 104 has a groove shape open to surfaces of the plates facing each other, and the separate plates 105 separate the hydraulic integrated circuits 110 of the respective oil passage plates 102 to 104 and connect specific oil passages 111 of the hydraulic integrated circuits 110 of the respective oil passage plates 102 to 104 to each other with a plurality of through holes (not illustrated) formed on the separate plates 105. It should be noted that, of the third oil passage plate 104, an oil passage 111 has a shape of horizontal hole in a vicinity of a later-described bolt insertion hole 106 into which the passage bolt 10A is inserted, as illustrated in FIG. 6.

As illustrated in FIG. 3, a plurality of valve insertion horizontal holes 102A to 104A having openings arranged on one side surface is formed on each of the oil passage plates 102 to 104, and a drive valve 120 such as a linear solenoid valve or a spool valve is attached to and housed in each of the valve insertion horizontal holes 102A to 104A. As illustrated in FIG. 5, the drive valve 120 has, for example, one or a plurality of valve bodies 122 on a shaft 121, and is linearly controlled to connect or disconnect between the valve insertion horizontal holes 102A to 104A and oil passages 111 branched from the respective valve insertion horizontal holes 102A to 104A. It should be noted that valves other than the drive valve 120 (for example, a damper valve, a check valve, or the like) may be attached to the valve insertion horizontal holes 102A to 104A.

As illustrated in FIGS. 3, 4 and 6, the first to third oil passage plates 102 to 104 are fixed in a stacked state by being fastened by a plurality of bolts 10 including the passage bolt 10A according to the present embodiment (refer to FIG. 6). A bolt 10 extends in a stacking direction of the first to third oil passage plates 102 to 104, has an insertion part 11 with a male thread part 12 formed on an outer surface of a tip end part, and has a head part 30 having a hexagonal columnar shape, the head part 30 being provided on a base end of the insertion part 11 and operable by a tool. A flange 31 is formed on a tip end side end portion of the head part 30. As illustrated in FIG. 3, some of the plurality of bolts 10 are inserted from a first oil passage plate 102 side and others of the plurality of bolts 10 are inserted from a third oil passage plate 104 side.

Bolt insertion holes 106 for inserting these bolts 10 are formed on the first to third oil passage plates 102 to 104 and the separate plates 105. On the bolt insertion hole 106 in the first oil passage plate 102 and on the bolt insertion hole 106 in the third oil passage plate 104, a female thread part 106Ais formed at a position corresponding to the male thread part 12 of the bolt 10. That is, the bolt 10 inserted from the side of the first oil passage plate 102 is screwed into the third oil passage plate 104, and the bolt 10 inserted from the side of the third oil passage plate 104 is screwed into the first oil passage plate 102. It should be noted that there may be a bolt 10 that is screwed into the second oil passage plate 103 and fastens the first oil passage plate 102 and second oil passage plate 103 only or the third oil passage plate 104 and second oil passage plate 103 only.

Here, as illustrated in FIG. 6, among the plurality of bolts 10, the passage bolt 10A according to the present embodiment has a communication passage 15 through which hydraulic oil can flow. Specifically, the communication passage 15 has a trunk passage 16 extending along a center of the passage bolt 10A and a branch passage 17 that branches laterally from the trunk passage 16 and opens to a side surface of the passage bolt 10A. In the passage bolt 10A according to the present embodiment, the trunk passage 16 has an opening 16A on a tip end surface of the passage bolt 10A, extends from the opening 16A to a position close to a base end side end portion of the insertion part 11, and is provided with an upper branch passage 17A extending from a position close to the base end side end portion of the trunk passage 16 toward right as illustrated in FIG. 6 and with a lower branch passage 17B extending from a portion slightly closer to the tip end side relative to a central portion on the trunk passage 16 toward left as illustrated in FIG. 6. On the outer surface of the passage bolt 10A, an annular recess 18 is formed over an entire circumference of a portion at a height where the lower branch passage 17B is disposed. In the present embodiment, an inner diameter of the upper branch passage 17A is substantially the same as an inner diameter of the trunk passage 16, and an inner diameter of the lower branch passage 17B is slightly smaller than the inner diameter of the trunk passage 16. It should be noted that the inner diameter of the lower branch passage 17B and the inner diameter of the trunk passage 16 may be substantially the same, and the inner diameters of both the upper branch passage 17A and lower branch passage 17B may be slightly smaller than the inner diameter of the trunk passage 16.

Furthermore, on the outer surface of the passage bolt 10A, a sealing groove 19 to which an O-ring 25 is attached is formed at a portion corresponding to a portion between the oil passage 111 of the second oil passage plate 103 and an upper separate plate 105 (the separate plate 105 between the first and second oil passage plates 102 and 103). Then, the O-ring 25 seals a portion between the hydraulic integrated circuit 110 of the first oil passage plate 102 and the hydraulic integrated circuit 110 of the second oil passage plate 103. Furthermore, a portion between the hydraulic integrated circuit 110 of the second oil passage plate 103 and the hydraulic integrated circuit 110 of the third oil passage plate 104 is sealed by the male thread part 12 being screwed into the female thread part 106A.

In the example illustrated in FIG. 6, the passage bolt 10A is configured to be inserted from the first oil passage plate 102 side, an oil passage 111 extending from the bolt insertion hole 106 toward right is formed on the first oil passage plate 102, and an oil passage 111 extending from the bolt insertion hole 106 toward left is respectively formed on the second and third oil passage plates 103 and 104. It should be noted that, in the third oil passage plate 104, a lower end portion of the bolt insertion hole 106 is positioned below a lower end portion of the oil passage 111.

As illustrated in the figure, an inner diameter of the bolt insertion hole 106 of the second oil passage plate 103 is substantially the same as an outer diameter of a corresponding portion of the passage bolt 10A, while an inner diameter of the bolt insertion hole 106 of the first oil passage plate 102 is larger than an outer diameter of the corresponding portion of the passage bolt 10A.

Then, when the passage bolt 10A described above is attached to the bolt insertion hole 106 of the oil passage body 101, a lower end portion of the trunk passage 16 of the communication passage 15 of the passage bolt 10A is connected to the oil passage 111 of the third oil passage plate 104, and the upper branch passage 17A and the lower branch passage 17B are connected to the oil passage 111 of the first oil passage plate 102 and the oil passage 111 of the second oil passage plate 103, respectively. With this arrangement, the oil passages 111 of the respective oil passage plates 102 to 104 (that is, the hydraulic integrated circuits 110 of the respective oil passage plates 102 to 104) communicate with each other by the communication passage 15 of the passage bolt 10A. It should be noted that a configuration may be employed in which hydraulic oil that flows down through the communication passage 15 flows from two oil passages 111 among the oil passages 111 of the first to third oil passage plates 102 to 104 into one oil passage 111, or flows from one oil passage 111 into two oil passages 111.

Configurations of the passage bolt 10A and hydraulic control device 100 according to the present embodiment are as described above. Next, a function and effect of the passage bolt 10A will be described. As described above, the bolt 10 including the passage bolt 10A according to the present embodiment fastens the first to third oil passage plates 102 to 104 (and the separate plate 105) by, for example, being inserted from the first oil passage plate 102 side and screwed into the third oil passage plate 104 in a state where the first to third oil passage plates 102 to 104 (and the separate plate 105) are stacked.

By the way, in a conventional hydraulic control device, a bolt insertion hole 106 for inserting a bolt is disposed so as to circumvent an oil passage (hydraulic integrated circuit). Meanwhile, in the hydraulic control device 100 according to the present embodiment, the passage bolt 10A among the bolts 10 has the communication passage 15 connected to the oil passages 111 of the oil passage plates 102 to 104, and, on the oil passage plates 102 to 104, the bolt insertion hole 106 can be provided at a portion where an oil passage 111 (hydraulic integrated circuit 110) is formed, and therefore, a degree of integration of the hydraulic integrated circuit 110 can be improved, and the oil passage plates 102 to 104 can be downsized.

Furthermore, the passage bolt 10A communicates between the oil passages 111 of the respective oil passage plates 102 to 104. Conventionally, for example, when an oil passage 111 of the first oil passage plate 102 and an oil passage 111 of the second oil passage plate 103 communicate with each other, it has been necessary in both the oil passage plates 102 and 103 to have the oil passages circumvent a bolt and communicate with each other through a through hole of a separate plate. However, with the above-described arrangement, the oil passage 111 of the first oil passage plate 102 and the oil passage 111 of the second oil passage plate 103, for example, can communicate with each other by the communication passage 15 of the passage bolt 10A according to the present embodiment, by which an entire oil passage body 101 can be downsized.

Furthermore, as described above, on the outer surface of the passage bolt 10A, the annular recess 18 is formed over the entire circumference of the portion at the height where the lower branch passage 17B is disposed, and therefore, a gap is formed between a bottom part of the annular recess 18 and an inner surface of the bolt insertion hole 106 of the second oil passage plate 103. Similarly, because the inner diameter of the bolt insertion hole 106 of the first oil passage plate 102 is larger than the outer diameter of the corresponding portion of the passage bolt 10A, a gap is also formed between an inner surface of the bolt insertion hole 106 of the first oil passage plate 102 and a portion, on the outer surface of the passage bolt 10A, at a height where the upper branch passage 17A is disposed. With this arrangement, hydraulic oil can flow even if an opening of the branch passage 17 and an opening of the oil passage 111 misalign in a circumferential direction due to processing deviation or the like.

### [Second embodiment]

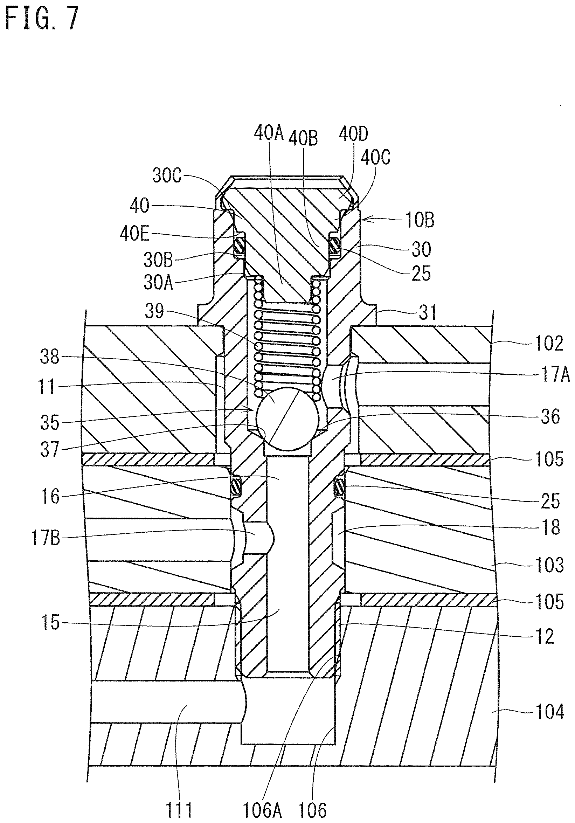

Next, a passage bolt 10B (corresponding to a "fastening bolt" in the claims) according to the present embodiment will be described with reference to FIG. 7. As illustrated in FIG. 7, the passage bolt 10B according to the present embodiment has a check valve mechanism 35 in a trunk passage 16 of a communication passage 15.

Specifically, in the passage bolt 10B, the trunk passage 16 extends until opening to a base end surface (a base end surface of a head part 30) of the passage bolt 10B. Then, on the trunk passage 16, a valve seat 36 in a tapered shape with a diameter increasing toward a base end side is formed at a portion closer to a tip end side relative to the upper branch passage 17A, and an inside of the valve seat 36 serves as a valve opening 37. Of the trunk passage 16, a portion closer to the base end side relative to the valve opening 37 has a diameter larger than a diameter of the tip end side, and houses a valve body 38, which has a spherical shape that approaches and separates with respect to the valve opening 37, and a compression coil spring 39 that presses the valve body 38 toward the valve opening 37.

A spring retaining member 40 that closes an opening and sandwiches the compression coil spring 39 with the valve body 38 is fixed to a base end part of the trunk passage 16. The spring retaining member 40 has a cylindrical shape with a diameter increasing stepwise upward as illustrated in FIG. 7, and has, in order from the compression coil spring 39 side, a small cylindrical part 40A, a medium cylindrical part 40B, a large cylindrical part 40C, and a flange part 40D. The base end part of the trunk passage 16 (a portion of the trunk passage 16, which is formed into the head part 30) also has a diameter gradually increasing upward correspondingly to the spring retaining member 40, and has a tapered part 30A in contact with a lower end outer edge portion of the medium cylindrical part 40B of the spring retaining member 40, an upper step surface 30C in contact with a lower surface of the flange part 40D, and a lower step surface 30B disposed between the tapered part 30A and the upper step surface 30C and facing a step surface 40E between the medium cylindrical part 40B and the large cylindrical part 40C from a lower side. The spring retaining member 40 is caulked and fixed in a state where the flange part 40D is in contact with the upper step surface 30C of the trunk passage 16. Furthermore, an O-ring 25 is disposed between the step surface 40E of the spring retaining member 40 and the lower step surface 30B of the trunk passage 16. In a state where the spring retaining member 40 is attached, the small cylindrical part 40A is received inside the compression coil spring 39 and regulates displacement of the compression coil spring 39.

The valve opening 37 is always closed by the valve body 38 pressed by the compression coil spring 39. Then, when pressure is applied to the valve body 38 from the valve opening 37 side (when differential pressure becomes larger than a minimum operation differential pressure), the valve body 38 separates from the valve opening 37 against pressing force of the compression coil spring 39, and the valve opening 37 is opened. With this arrangement, flow of hydraulic oil from an oil passage 111 of a second oil passage plate 103 and an oil passage 111 of a third oil passage plate 104 to an oil passage 111 of a first oil passage plate 102 is allowed, and flow of hydraulic oil from the oil passage 111 of the first oil passage plate 102 to the oil passage 111 of the second oil passage plate 103 and the oil passage 111 of the third oil passage plate 104 is regulated.

It should be noted that, as illustrated in FIG. 7, in the present embodiment, the oil passage 111 has a horizontal hole shape and is disposed in each of the oil passage plates 102 to 104 instead of having a groove shape opened on one surface (or two surfaces) of the oil passage plates 102 to 104. It is desirable that heights of the upper branch passage 17A and lower branch passage 17B be set so that openings of the upper branch passage 17A and the lower branch passage 17B and an opening of the oil passage 111 face each other. In the above-described case, there is formed a gap between a bottom part of the annular recess 18 and the inner surface of the bolt insertion hole 106 of the second oil passage plate 103, and between the inner surface of the bolt insertion hole 106 of the first oil passage plate 102 and a portion, on an outer surface of the passage bolt 10B, at a height where the upper branch passage 17A is disposed. Therefore, hydraulic oil can flow even if the heights are slightly different from each other.

According to the present embodiment, it is possible to suppress, by using the check valve mechanism 35, reverse current of hydraulic oil that flows inside the communication passage 15, and to perform control so that hydraulic oil flows in a case of a specific pressure difference or larger by using an appropriate minimum operation differential pressure. Then, because the passage bolt 10B includes the check valve mechanism 35, it is possible to downsize the oil passage plates 102 to 104 and eventually the entire oil passage body 101, as compared to a case where a check valve and a bolt are separately provided.

### [Third embodiment]

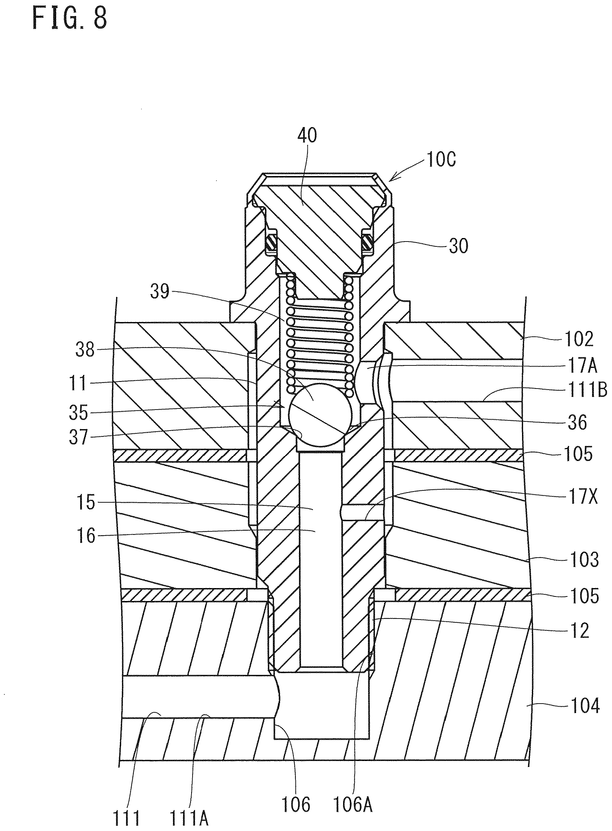

A passage bolt 10C (corresponding to a "fastening bolt" in the claims) according to the present embodiment is different from the above-described passage bolt 10B according to the second embodiment in the following points. That is, as illustrated in FIG. 8, in the present embodiment, a lower branch passage 17 (a branch passage on an upstream side of a check valve mechanism 35) among upper and lower branch passages 17 serves as an orifice 17X having an inner diameter of about a half to quarter an inner diameter of a trunk passage 16. The orifice 17X is not in direct communication with an oil passage 111 of a second oil passage plate 103.

Furthermore, although the above-described passage bolt 10B according to the second embodiment has, on an outer surface, the annular recess 18 formed on a portion at a height where the lower branch passage 17B is disposed, an annular recess 18 is not formed on the passage bolt 10C according the present embodiment. Instead, in the present embodiment, as similar to an inner diameter of a bolt insertion hole 106 of a first oil passage plate 102, an inner diameter of the bolt insertion hole 106 of a second oil passage plate 103 is larger than an outer diameter of a corresponding portion of the passage bolt 10C, and a gap is formed between an inner surface of the bolt insertion hole 106 of the second oil passage plate 103 and an outer surface of the passage bolt 10C. Moreover, the gap is connected to a gap between an inner surface of the bolt insertion hole 106 of the first oil passage plate 102 and the outer surface of the passage bolt 10C, by which hydraulic oil that flows through an oil passage 111 of the first oil passage plate 102 can pass through the gaps between the inner surface of the bolt insertion hole 106 of each of the first and second oil passage plates 102 and 103 and the outer surface of the passage bolt 10C, pass through the orifice 17X, and then flow into an oil passage 111 of a third oil passage plate 104.

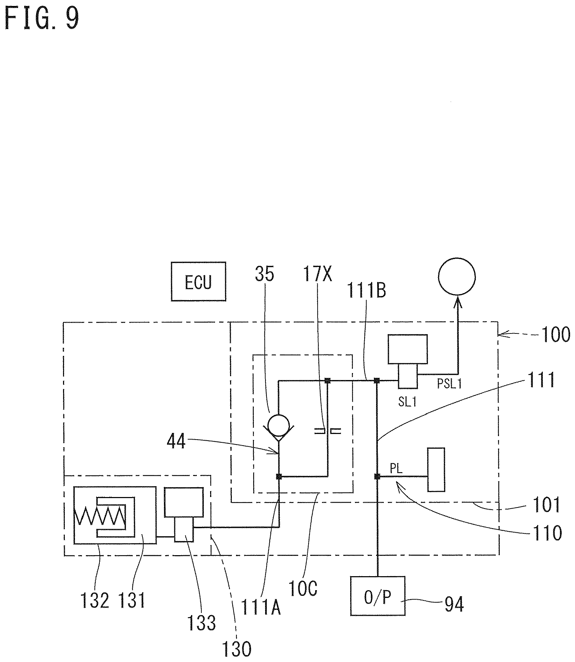

By the way, as illustrated in FIG. 9, a hydraulic control device 100 may include a pressure accumulation device 130 coupled to a hydraulic integrated circuit 110 in an oil passage body 101 (refer to Japanese Patent Application Laid-Open No. 2017-180759). The pressure accumulation device 130 has an accumulator 132 including a pressure chamber 131 capable of accumulating pressure in the hydraulic integrated circuit 110, and a solenoid valve 133 capable of opening and closing the pressure chamber 131. The pressure accumulation device 130 opens the solenoid valve 133 to accumulate pressure inside the hydraulic integrated circuit 110 in the pressure chamber 131 before an engine 98 stops for idle reduction, and closes the solenoid valve 133 to maintain a pressure accumulation state in the pressure chamber 131 while the engine 98 stops for idle reduction. When the engine 98 restarts, the solenoid valve 133 is opened again to release oil pressure accumulated in the pressure chamber 131 to the hydraulic integrated circuit 110.

The hydraulic control device 100 of this type is provided with a delay part 44 having the check valve mechanism 35 and the orifice 17X in a middle of an oil passage 111 communicating between an oil pump 94 and the pressure accumulation device 130. The check valve mechanism 35 has the pressure accumulation device 130 disposed at an upstream side of an allowable flow direction and the oil pump 94 mounted at a downstream side of the allowable flow direction, and allows hydraulic oil to flow from the pressure accumulation device 130 side to the oil pump 94 side, while regulating flow of hydraulic oil from the oil pump 94 side to the pressure accumulation device 130 side. The orifice 17X is provided in parallel with the check valve mechanism 35. Hereinafter, among the oil passages 111 communicating between the oil pump 94 and the pressure accumulation device 130, an oil passage 111 closer to the pressure accumulation device 130 relative to the delay part 44 is referred to as a pressure accumulation device-side oil passage 111A as appropriate, and an oil passage 111 closer to the oil pump 94 relative to the delay part 44 is referred to as a pump-side oil passage 111B as appropriate.

In the delay part 44, when pressure in the pressure accumulation device-side oil passage 111A is higher than pressure in the pump-side oil passage 111B (a minimum operation differential pressure or higher), a valve opening 37 of the check valve mechanism 35 opens and hydraulic oil flows at a high speed toward the pump-side oil passage 111B, and when pressure in the pressure accumulation device-side oil passage 111A is lower than pressure in the pump-side oil passage 111B, the valve opening 37 of the check valve mechanism 35 closes and hydraulic oil flows at a low speed toward the pressure accumulation device-side oil passage 111A via the orifice 17X.

The above-described hydraulic control device 100 operates as follows. That is, when the engine 98 is driven during a normal traveling of a vehicle 99, the oil pump 94 operates and a high oil pressure is generated in the pump-side oil passage 111B. The hydraulic oil in a high-pressure state passes at a low speed through the orifice 17X of the delay part 44 and reaches the pressure accumulation device 130, and pressure in the pressure chamber 131 gradually increases and accumulates. When sufficient pressure is accumulated in the pressure chamber 131, the solenoid valve 133 is closed to maintain a pressure accumulation state of the pressure chamber 131. After that, once the engine 98 stops for idle reduction, or the like, the pressure in the hydraulic integrated circuit 110 is reduced while the pressure accumulation state in the pressure chamber 131 is maintained. Then, when the engine 98 starts again, the solenoid valve 133 is switched to an open state to open the pressure chamber 131, hydraulic oil passes through the check valve mechanism 35 at a high speed, and a rise in pressure in the pump-side oil passage 111B is assisted.

Here, in the hydraulic control device 100 according to the present embodiment, the check valve mechanism 35 of the delay part 44 and the orifice 17X are disposed on the passage bolt 10C, and therefore, the delay part 44 can be provided only by attaching the passage bolt 10C. Thus, by using the passage bolt 10C having the check valve mechanism 35 and the orifice 17X as a bolt, it is possible to downsize the oil passage plates 102 to 104 and eventually an entire oil passage body 101, as compared to a case where the check valve mechanism 35 and the orifice 17X are provided separately from the bolt.

### [Fourth embodiment]

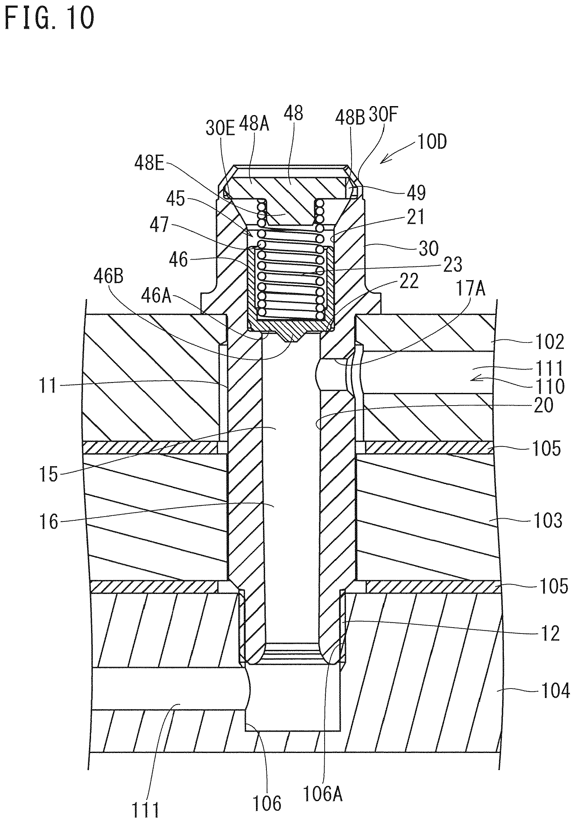

Next, a passage bolt 10D (corresponding to a "fastening bolt" in the claims) according to the present embodiment will be described with reference to FIG. 10. The passage bolt 10D according to the present embodiment has a shock absorbing part 45.

Specifically, in the passage bolt 10D, there is formed a central hole 20 that extends along a central portion of the passage bolt 10D and opens from a tip end surface (a tip end surface of an insertion part 11) to a base end surface (a base end surface of a head part 30). In the central hole 20, there is formed a large diameter part 21 with a diameter of the base end side end portion increasing stepwise. A tip end side of the large diameter part 21 is disposed above an upper branch passage 17A and is positioned slightly below an end surface of a tip end side of the flange 31 of the head part 30. A base end side end portion of the large diameter part 21 has a diameter increasing in a tapered manner, and a head base end surface 30E extends outward from the base end part.

The large diameter part 21 has an opening on a base end side closed by a lid 48, and houses a movable tubular body 46 that has a cap structure in which one end is bottomed and the bottom part 46A is disposed at a step surface 22 side between the large diameter part 21 and a tip end side thereof, and a compression coil spring 47 that is disposed between the bottom part 46A of the movable tubular body 46 and the lid 48 and presses the movable tubular body 46 toward the step surface 22 side. Here, an inside of the central hole 20 is divided by the movable tubular body 46 (especially the bottom part 46A) into a spring housing chamber 23 on a base end side and a trunk passage 16 on a tip end side. It should be noted that a projection 46B is provided on an outer surface of the bottom part 46A of the movable tubular body 46.

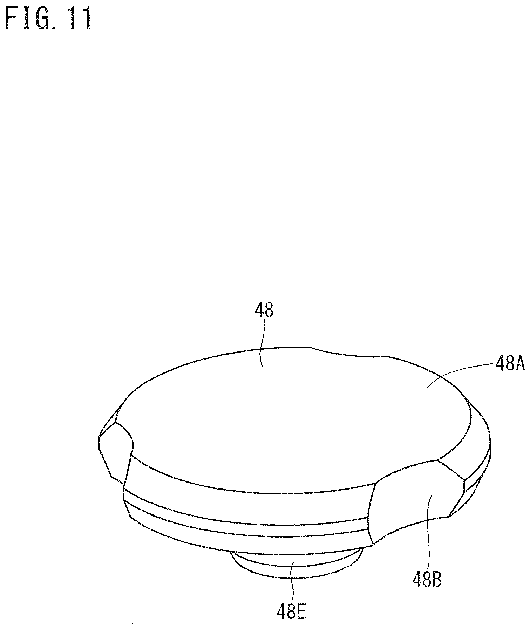

As illustrated in FIGS. 10 and 11, the lid 48 coaxially has a disk part 48A and a cylindrical part 48E, and is caulked and fixed by a caulking part 30F provided on the head base end surface 30E in a state where the cylindrical part 48E is received in the large diameter part 21 and an outer edge portion of the disk part 48A is in contact with the head base end surface 30E. In a state where the lid 48 is attached, the cylindrical part 48E is received inside the compression coil spring 47 and regulates displacement of the compression coil spring 47.

Furthermore, on the disk part 48A of the lid 48, a recess 48B is formed at each of three points in a circumferential direction. A minute passage 49 generated between the recess 48B and the caulking part 30F connects inside and outside of the spring housing chamber 23. It should be noted that upper and lower outer edges of the disk part 48A are chamfered.

It should be noted that, in the present embodiment, only the upper branch passage 17A is formed as a branch passage 17 of a communication passage 15, and hydraulic oil flows from an oil passage 111 of a first oil passage plate 102 to an oil passage 111 of a third oil passage plate 104, or from the oil passage 111 of the third oil passage plate 104 to the oil passage 111 of the first oil passage plate 102.

The shock absorbing part 45 acts as follows. First, the movable tubular body 46 is always pressed by the compression coil spring 47 and is in contact with the step surface 22. Then, when pressure in a hydraulic integrated circuit 110 rises sharply, and the outer surface of the bottom part 46A of the movable tubular body 46 receives the pressure, the movable tubular body 46 elastically deforms the compression coil spring 47 and linearly moves toward the lid 48 side, by which inner volume of the trunk passage 16 increases, and therefore, an increase in pressure in the hydraulic integrated circuit 110 is reduced. At this time, the movable tubular body 46 linearly moves smoothly, because the spring housing chamber 23 and outside of the spring housing chamber 23 communicates with each other by the minute passage 49.

Thus, because the passage bolt 10D according to the present embodiment is provided with the shock absorbing part 45, an increase in pressure in the hydraulic integrated circuit 110 is reduced. Furthermore, because the bolt is provided with the shock absorbing part 45, it is possible to downsize the oil passage plates 102 to 104 and eventually an entire oil passage body 101, as compared to a case where the shock absorbing part 45 and the bolt are separately provided. Furthermore, because the number of parts can be reduced, assembly work of the oil passage body 101 can be simplified.

### [Fifth embodiment]

A passage bolt 10E according to the present embodiment is different from the above-described passage bolt 10D according to the fourth embodiment in that a check valve mechanism 35Z is provided in a middle of a trunk passage 16. Details will be described below.

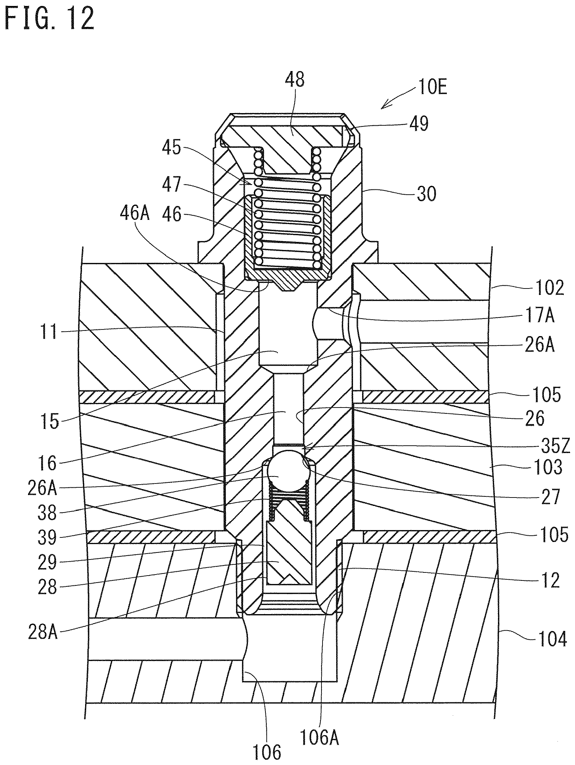

As illustrated in FIG. 12, in the present embodiment, there is formed in a middle of the trunk passage 16 a small diameter part 26 having a uniform circumferential surface between tapered parts 26A at both ends thereof. Among the tapered parts 26A at the both ends, a tapered part 26A on a tip end side serves as a valve seat having a valve opening 27 inside. On the trunk passage 16, a portion closer to the tip end side relative to the valve opening 27 houses a valve body 38 which has a spherical shape and approaches and separates with respect to the valve opening 27, and a compression coil spring 39 which is disposed at an opposite side of the valve opening 37 across the valve body 38 and presses the valve body 38 toward the valve opening 37.

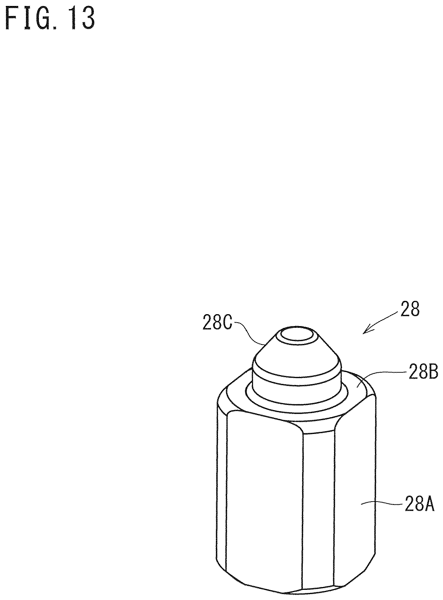

A spring retaining member 28 that sandwiches the compression coil spring 39 with the valve body 38 is fixed to a position close to a tip end part of the trunk passage 16. As illustrated in FIG. 13, the spring retaining member 28 according to the present embodiment has a shape of a cylindrical body with a cutout part 28A cut out in an entire axial direction at four points in a circumferential direction, and is press-fitted into the trunk passage 16. In a state where the spring retaining member 28 is press-fitted into the trunk passage 16, hydraulic oil can pass through a passage 29 formed between an inner surface of the trunk passage 16 and an outer surface of the cutout part 28A. On the spring retaining member 28, there is formed a protrusion part 28C having a shape in which a cylinder and a truncated cone are stacked and protruding from a center of a tip end surface 28B. Then, the protrusion part 28C is received inside the compression coil spring 39 and regulates displacement of the compression coil spring 39.

In the check valve mechanism 35Z, as similar to the above-described check valve mechanism 35 according to the second embodiment, the valve opening 27 is always closed by the valve body 38 pressed by the compression coil spring 39. Then, when pressure is applied to the valve body 38 from the valve opening 27 side (when differential pressure becomes larger than a minimum operation differential pressure), the valve body 38 separates from the valve opening 27 against pressing force of the compression coil spring 39, and the valve opening 27 is opened. Hydraulic oil that has passed through the valve opening 27 passes through the passage 29 and flows down to a downstream side. With the above-described configuration, in the present embodiment, flow of hydraulic oil from an oil passage 111 of a first oil passage plate 102 to an oil passage 111 of a third oil passage plate 104 is allowed, however, flow of hydraulic oil from the oil passage 111 of the third oil passage plate 104 to the oil passage 111 of the first oil passage plate 102 is regulated.

Because the passage bolt 10E according to the present embodiment is provided with the check valve mechanism 35Z and the shock absorbing part 45, it is possible to downsize the oil passage plates 102 to 104 and eventually an entire oil passage body 101, as compared to a case where the check valve mechanism 35Z and the shock absorbing part 45 are separately provided. Furthermore, because the number of parts can be reduced, assembly work of the oil passage body 101 can be simplified.

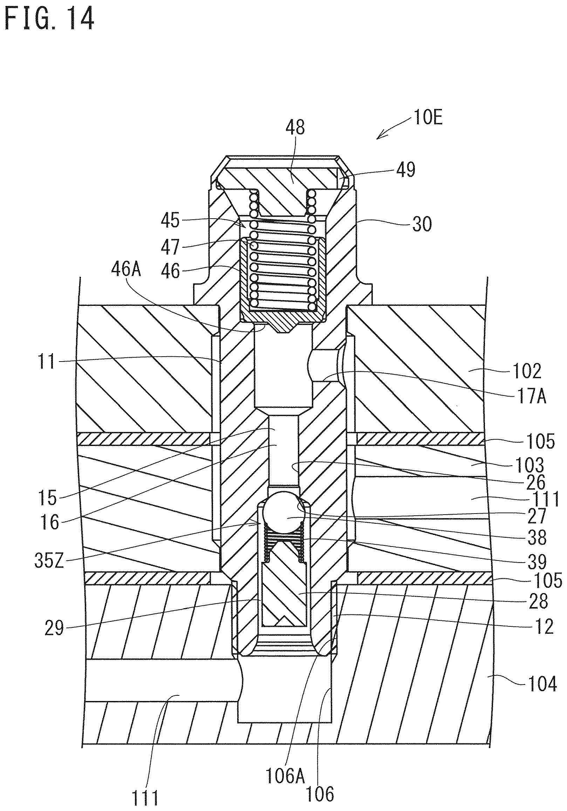

Furthermore, as illustrated in FIG. 14, the passage bolt 10E according to the present embodiment may also be used to communicate between an oil passage 111 of the second oil passage plate 103 and the oil passage 111 of the third oil passage plate 104. Specifically, as illustrated in FIG. 14, in the first oil passage plate 102, the oil passage 111 and a bolt insertion hole 106 do not communicate with each other, and in the second oil passage plate 103, the oil passage 111 and the bolt insertion hole 106 communicate with each other. Then, a gap is formed between an inner surface of the bolt insertion hole 106 of the first oil passage plate 102 and an outer surface of the passage bolt 10C, and another gap is formed between an inner surface of the bolt insertion hole 106 of the second oil passage plate 103 and the outer surface of the passage bolt 10C, and the gaps communicate with each other. With this arrangement, hydraulic oil that flows down the oil passage 111 of the second oil passage plate 103 flows into the trunk passage 16 via the gaps and the upper branch passage 17A, passes through the valve opening 27 that is opened, and flows down to the oil passage 111 of the third oil passage plate 104.

### [Sixth embodiment]

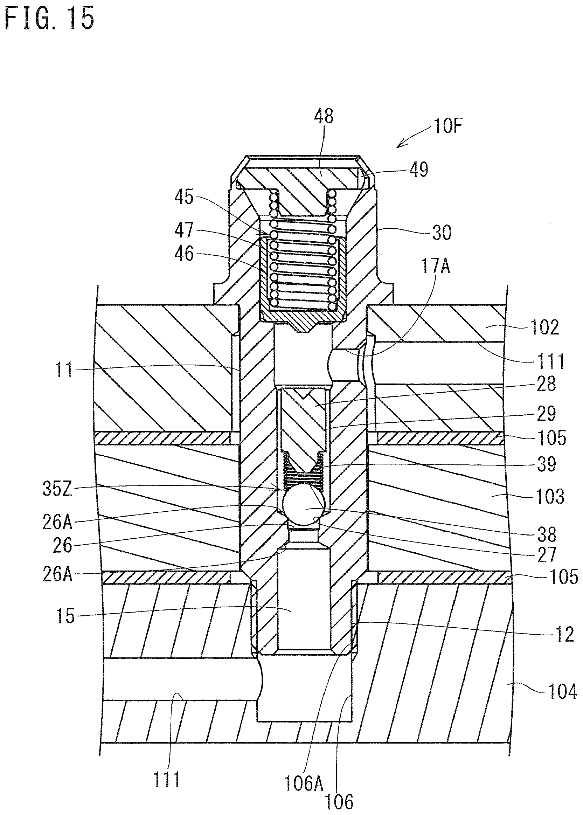

A passage bolt 10F according to the present embodiment is different from the above-described passage bolt 10E according to the fifth embodiment in a direction of a check valve mechanism 35Z. Specifically, as illustrated in FIG. 15, in the passage bolt 10F according to the present embodiment, a base end side end portion of a small diameter part 26 is positioned close to a tip end side as compared to the above-described passage bolt 10E according to the fifth embodiment, and inside of a tapered part 26A on a base end side serves as a valve opening 27. Then, on a trunk passage 16, a portion closer to a base end side relative to the valve opening 27 houses a valve body 38 and a compression coil spring 39, and a spring retaining member 28 is press-fitted from a base end side of a central hole 20.

With the above-described configuration, flow of hydraulic oil from an oil passage 111 of a third oil passage plate 104 to an oil passage 111 of a first oil passage plate 102 is allowed, however flow of hydraulic oil from the oil passage 111 of the first oil passage plate 102 to the oil passage 111 of the third oil passage plate 104 is regulated.

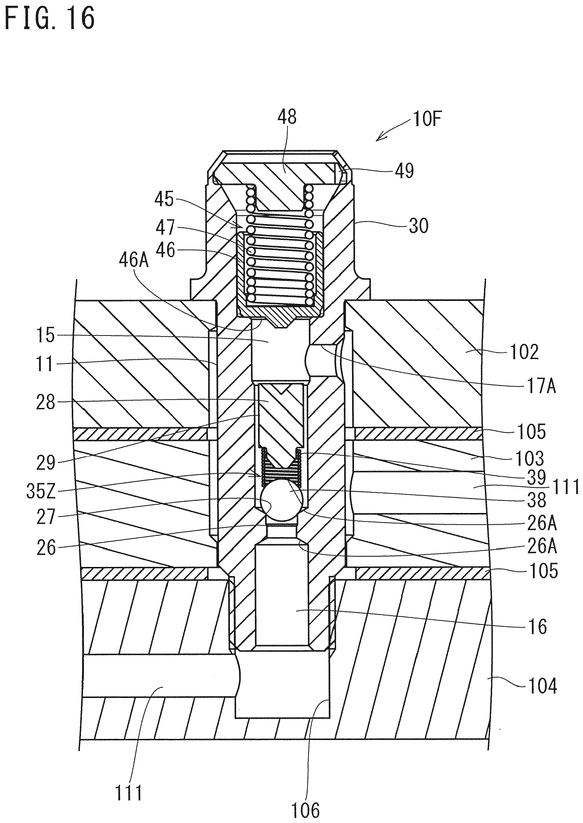

It should be noted that, as illustrated in FIG. 16, an oil passage 111 of the second oil passage plate 103 and the oil passage 111 of the third oil passage plate 104 may be configured to communicate with each other.

### [Seventh embodiment]

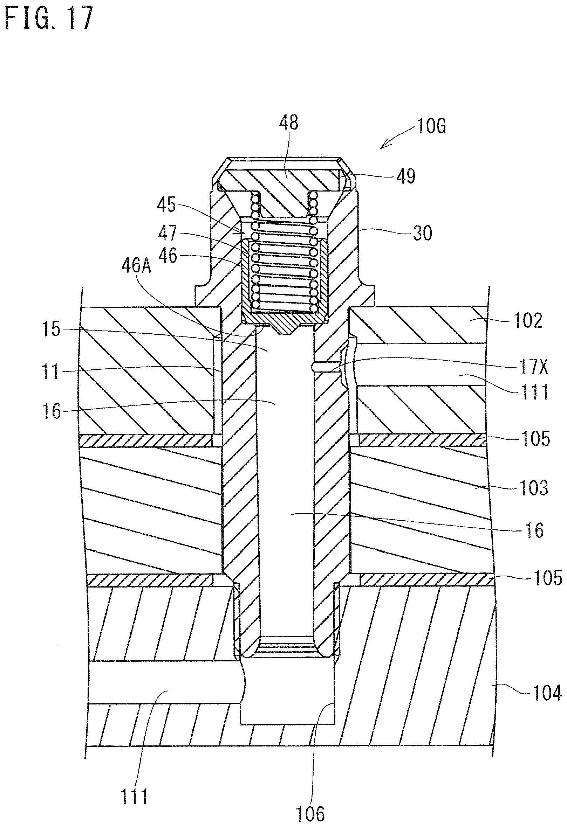

A passage bolt 10G according to the present embodiment illustrated in FIG. 17 is different from the above-described passage bolt 10D according to the fourth embodiment in that an upper branch passage 17A serves as an orifice 17X.

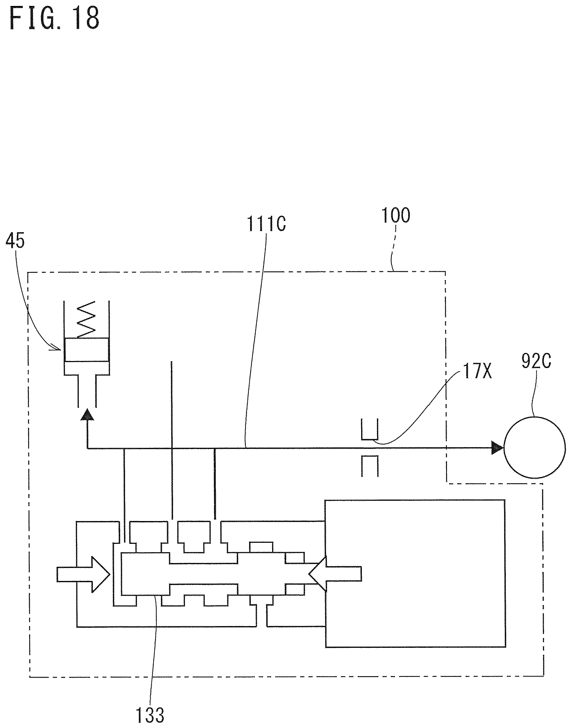

By the way, for example, in an automatic transmission as a transmission 90 (refer to FIG. 1), a transmission mechanism unit 92 includes a clutch 92C (refer to FIG. 18) for changing a power transmission route from an input side to an output side. The clutch 92C operates by receiving hydraulic oil from a hydraulic control device 100. FIG. 18 illustrates a solenoid valve 133 for supplying hydraulic oil to the clutch 92C. The solenoid valve 133 changes amount of hydraulic oil (that is, changes oil pressure) to be sent to the clutch 92C according to an amount of linear motion.

Here, the orifice 17X may be provided in a middle of an oil passage 111C communicating between the solenoid valve 133 and the clutch 92C, and a shock absorbing part 45 may be provided between the orifice 17X and the solenoid valve 133 in order to absorb and dampen pulsation of pressure of hydraulic oil that passes through the orifice 17X.

Because the passage bolt 10G according to the present embodiment is provided with the shock absorbing part 45 and the orifice 17X, it is possible to obtain the above-described circuit configuration by using the passage bolt 10G instead of an ordinary bolt. Furthermore, it is possible to downsize oil passage plates 102 to 104 and eventually an entire oil passage body 101, as compared to a case where the shock absorbing part 45 and the orifice 17X are provided separately from the bolt.

### [Eighth embodiment]

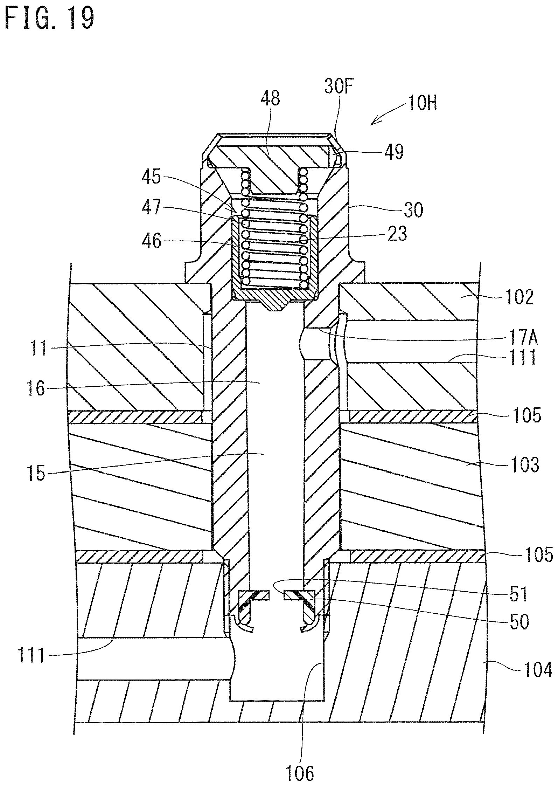

Although an upper branch passage 17A serves as an orifice 17X in the above-described passage bolt 10G according to the seventh embodiment, an annular member 50 may be attached to an opening part on a tip end side of a trunk passage 16, and an inside thereof may serve as an orifice 51 as in a passage bolt 10H according to the present embodiment as illustrated in FIG. 19.

### [Ninth embodiment]

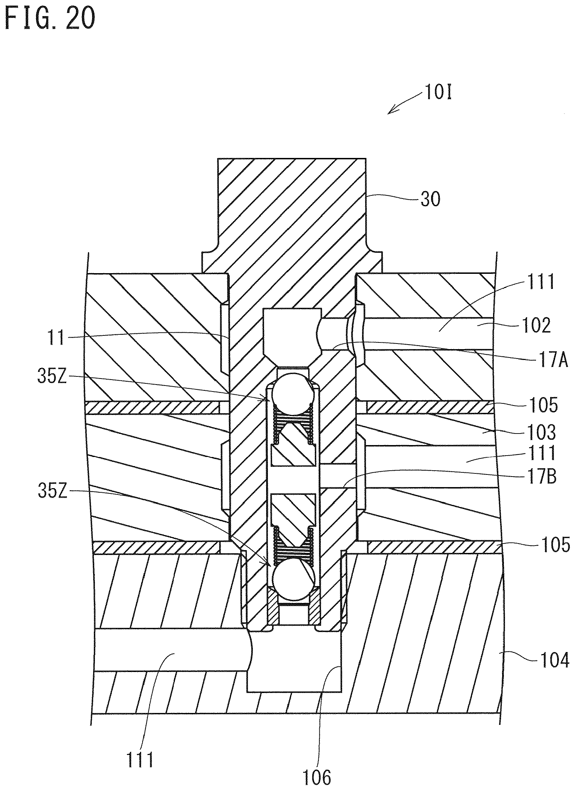

As with a passage bolt 101 (corresponding to a "fastening bolt" in the claims) illustrated in FIG. 20, a configuration may be employed in which a pair of check valve mechanisms 35Z is disposed on a trunk passage 16 across a lower branch passage 17B. Among the two check valve mechanisms 35Z, a check valve mechanism 35Z on a base end side is disposed in a direction that allows flow from the base end side to a tip end side, and a check valve mechanism 35Z on the tip end side is disposed in a direction that allows flow from the tip end side to the base end side. According to the passage bolt 101, hydraulic oil that has passed through the check valve mechanism 35Z from an oil passage 111 of a first oil passage plate 102 and hydraulic oil that has passed through the check valve mechanism 35Z from an oil passage 111 of a third oil passage plate 104 merge between the pair of check valve mechanisms 35Z, and flows down through an oil passage 111 of a second oil passage plate 103 via the lower branch passage 17B.

### [Tenth embodiment]

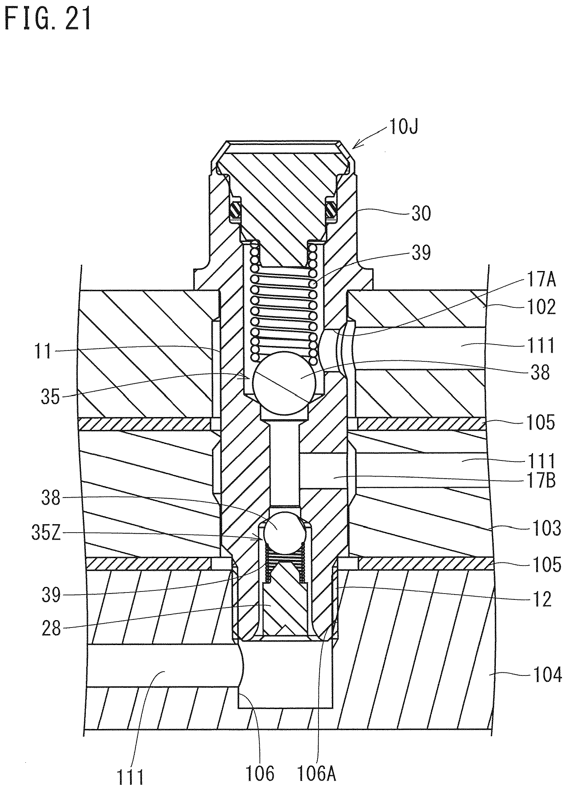

A passage bolt 10J (corresponding to a "fastening bolt" in the claims) illustrated in FIG. 21 is different from the above-described passage bolt 101 according to the ninth embodiment in a direction that allows flow at a pair of check valve mechanisms 35 and 35Z. According to this configuration, hydraulic oil that has flowed from an oil passage 111 of a second oil passage plate 103 to a lower branch passage 17B flows down by branching into an oil passage 111 of a first oil passage plate 102 and an oil passage 111 of a third oil passage plate 104.

### [Other embodiments]

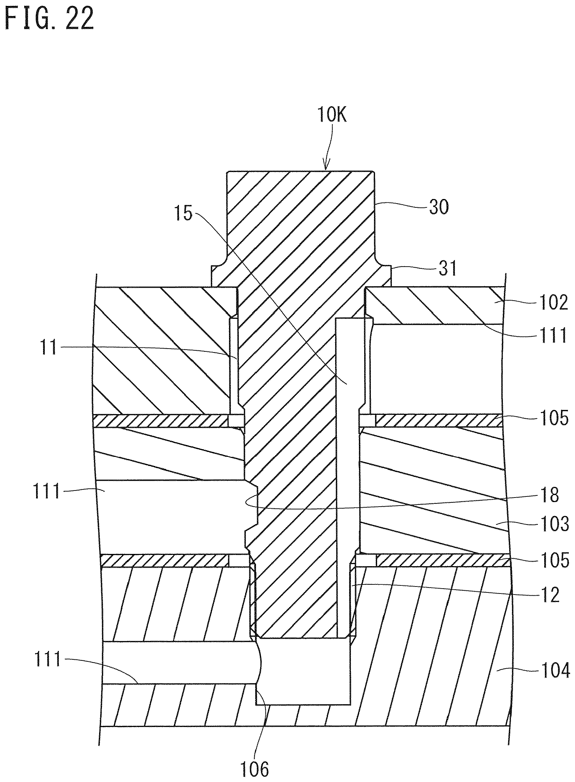

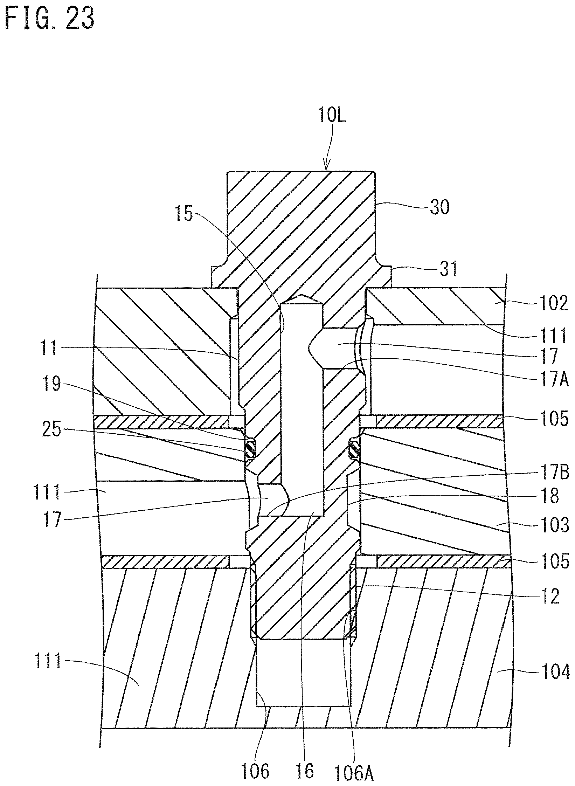

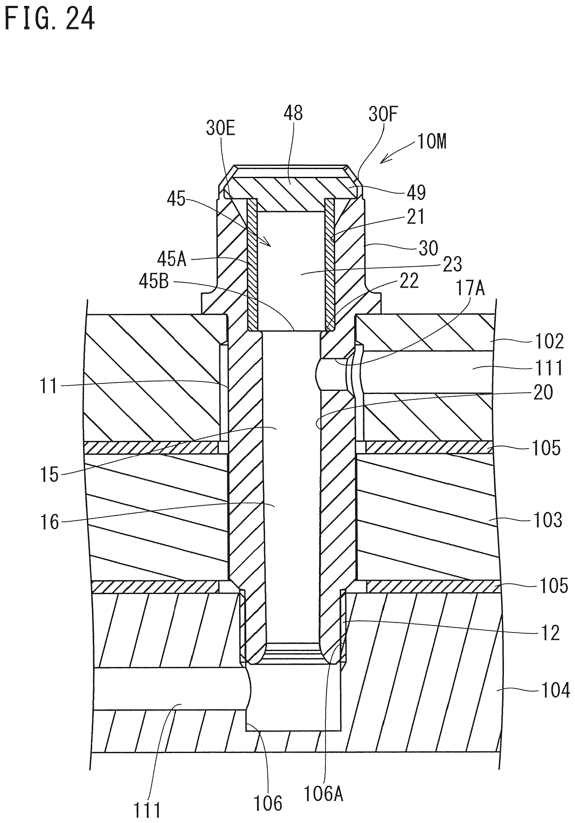

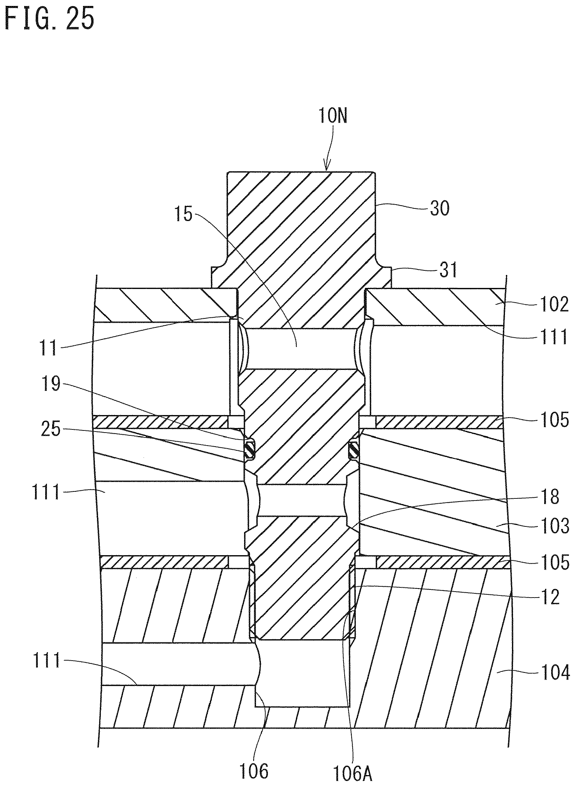

(1) Although a communication passage 15 has a hole shape and is formed so as to open to an outer surface of one of passage bolts 10A to 10J in the above-described embodiments, a communication passage 15 may be formed in a groove shape on a side surface of a passage bolt 10K as illustrated in FIG. 22.
(2) Although a trunk passage 16 is open to a tip end surface of one of the passage bolts 10A to 10J in the above-described embodiments, an end portion of the tip end surface may be closed as illustrated in FIG. 23. In this case, hydraulic integrated circuits 110 of any two oil passage plates may communicate with each other, or the hydraulic integrated circuits 110 of three oil passage plates 102, 103, and 104 may communicate with one another (that is, there may be three branch passages 17).
(3) In the above-described fourth to seventh embodiments, a shock absorbing part 45 may be configured as follows. That is, a lid 48 may have a sealed structure, so that air in a spring housing chamber 23 is compressed as a movable tubular body 46 moves. In this case, a compression coil spring 47 may or may not be provided in the spring housing chamber 23. Furthermore, a diaphragm or a bellows may be provided instead of the movable tubular body 46. Specifically, as illustrated in FIG. 24, it is only required to press-fit or screw a collar 45A having a tubular shape into the spring housing chamber 23 and to sandwich, to support, a diaphragm 45B, or the like, between a step surface 22 at an end portion of a large diameter part 21 and the collar 45A. In this case as well, the compression coil spring 47 may or may not be provided in the spring housing chamber 23.
(4) As illustrated in FIG. 25, a communication passage 15 of a passage bolt 10N may be configured to communicate only between oil passages 111 in the same oil passage plate, instead of communicating oil passages 111 between a plurality of plates.
(5) In a hydraulic control device 100, the above-described passage bolts 10A to 10N and a bolt 10 that does not have a communication passage 15 may be used in combination as appropriate.

### REFERENCE SIGNS LIST

- 10: Bolt
- 10A to 10N: Passage bolt
- 15: Communication passage
- 16: Trunk passage
- 17: Branch passage
- 17X: Orifice
- 35, 35Z: Check valve mechanism
- 44: Delay part
- 45: Shock absorbing part
- 50: Annular member
- 51: Orifice
- 90: Transmission
- 92C: Clutch
- 94: Oil pump
- 100: Hydraulic control device
- 101: Oil passage body
- 102 to 104: Oil passage plate
- 102A to 104A: Valve insertion horizontal hole
- 106: Bolt insertion hole
- 110: Hydraulic integrated circuit
- 111: Oil passage
- 120: Drive valve
- 130: Pressure accumulation device

## Claims

1. A fastening bolt that fixes a plurality of stacked plates on each of which a hydraulic integrated circuit for hydraulically controlling an automatic transmission or a continuously variable transmission is formed, the fastening bolt comprising,
a communication passage that communicates between the hydraulic integrated circuits among the plurality of plates.

2. The fastening bolt according to claim 1, wherein the communication passage includes a trunk passage extending along a central portion of the fastening bolt, and one or a plurality of branch passages that branches laterally from the trunk passage and opens to a side surface of the fastening bolt.

3. The fastening bolt according to claim 2, wherein the trunk passage is closed on a base end side of the fastening bolt, while opening to a tip end surface of the fastening bolt.

4. The fastening bolt according to claim 3, wherein, on the trunk passage, an end portion of a tip end side of the fastening bolt is reduced in diameter so as to be an orifice.

5. The fastening bolt according to claim 4, wherein
a prepared hole is drilled in a center of a tip end part of the fastening bolt, a core component is mounted in the prepared hole, and
the orifice penetrates the core component.

6. The fastening bolt according to any one of claims 2 to 5, wherein the branch passage is an orifice having an area through which fluid passes, the area being small as compared to the trunk passage.

7. The fastening bolt according to any one of claims 2 to 6, wherein an annular groove is formed on an outer surface of the fastening bolt, and the branch passage opens to a bottom surface of the annular groove.

8. The fastening bolt according to any one of claims 2 to 7, the fastening bolt comprising:
a first variable member that is supported by a bolt main body of the fastening bolt, the bolt main body being fixed to the plate, and that moves or deforms so as to change inner volume of the communication passage according to a change in pressure in the communication passage; and
a first elastic deformation part that elastically deforms as the first variable member moves or deforms.

9. The fastening bolt according to claim 8, the fastening bolt comprising:
a central hole that extends along a central portion of the bolt main body and opens to a base end surface of the bolt main body;
a large diameter part that is configured by increasing a diameter of the central hole, between a position close to a base end of the bolt main body and the base end surface, and houses the first variable member in a linearly movable manner;
a lid that closes an opening of the base end surface of the bolt main body in the central hole in a state where fluid is able to pass through; and
a compression coil spring as the first elastic deformation part housed between the first variable member and the lid,
wherein the central hole branches into a spring housing chamber closer to the base end surface relative to the first variable member, and the trunk passage of the communication passage.

10. The fastening bolt according to claim 9, wherein the first variable member has a cap structure in which one end is bottomed and a bottom part is disposed on a side away from the lid.

11. The fastening bolt according to claim 9 or 10, the fastening bolt comprising:
a first branch passage of the one or plurality of branch passages branching from a middle portion of the trunk passage; and
a check valve mechanism that is provided, on the trunk passage, at an opposite side of the first variable member across the first branch passage and allows fluid to pass toward a side away from the first variable member, while preventing fluid from passing in an opposite direction.

12. The fastening bolt according to claim 9 or 10, the fastening bolt comprising:
a first branch passage of the one or plurality of branch passages branching from a middle portion of the trunk passage; and
a check valve mechanism that is provided, on the trunk passage, at an opposite side of the first variable member across the first branch passage and allows fluid to pass toward a side close to the first variable member, while preventing fluid from passing in an opposite direction.

13. The fastening bolt according to any one of claims 8 to 10, wherein, on the communication passage, an orifice is provided on a downstream side of the first variable member.

14. The fastening bolt according to any one of claims 2 to 13, the fastening bolt having a check valve mechanism in the trunk passage.

15. The fastening bolt according to claim 14, wherein the check valve mechanism has
a valve seat configured by squeezing a halfway portion of the trunk passage and a valve opening inside the valve seat,
a valve body that is housed, closer to the downstream side relative to the valve opening in the trunk passage, and approaches and separates with respect to the valve opening,
a compression coil spring that presses the valve body toward the valve opening, and
a spring retaining member that is fixed to a bolt main body of a fastening bolt, the bolt main body being fixed to the plate, and sandwiches the compression coil spring with the valve body.

16. The fastening bolt according to claim 15,
wherein the spring retaining member is fixed to inside the trunk passage, and fluid is able to pass through between an outer surface of the spring retaining member and an inner surface of the trunk passage.

17. The fastening bolt according to any one of claims 14 to 16, the fastening bolt comprising:
a first branch passage of the one or plurality of branch passages branching from a middle portion of the trunk passage; and
on the trunk passage, a pair of the check valve mechanisms on a base end side and tip end side of the fastening bolt, the base end side and tip end side sandwiching the branch passage,
wherein fluid that has passed through each of the pair of check valve mechanisms merges and flows passing through the first branch passage.

18. The fastening bolt according to any one of claims 14 to 17, the fastening bolt comprising:
the branch passage as a bypass, the branch passage branching from, on the trunk passage, an upstream side of the check valve mechanism and having an area through which fluid passes, the area being smaller than the valve opening; and
a passage formation part that is provided on an outer surface of the fastening bolt and forms, on the plate, an inter-component passage with an inner surface of an insertion hole into which the fastening bolt is inserted,
wherein the inter-component passage communicates between the hydraulic integrated circuit that connects to a downstream side of the check valve mechanism of the communication passage and the branch passage as a bypass.

19. A hydraulic control device comprising
a plurality of stacked plates on which a hydraulic integrated circuit for hydraulically controlling an automatic transmission or a continuously variable transmission is formed, in which a plurality of valve insertion horizontal holes in parallel with a superposed surface of the plates is formed on any of the plurality of plates, and the valve insertion horizontal holes house valve bodies of a plurality of drive valves,
wherein the plurality of plates is fixed by the fastening bolt according to any one of claims 1 to 18.

20. A hydraulic control device comprising
a plurality of stacked plates on which a hydraulic integrated circuit for hydraulically controlling an automatic transmission or a continuously variable transmission is formed, in which a plurality of valve insertion horizontal holes in parallel with a superposed surface of the plates is formed on any of the plurality of plates, and the valve insertion horizontal holes house valve bodies of a plurality of drive valves, wherein
the plurality of plates is fixed by the fastening bolt according to claim 13, and
the communication passage of the fastening bolt is disposed in a passage, of the hydraulic integrated circuit, that flows fluid from a pump to a clutch in the automatic transmission or continuously variable transmission.

21. A hydraulic control device comprising
a plurality of stacked plates on which a hydraulic integrated circuit for hydraulically controlling an automatic transmission or a continuously variable transmission is formed, in which a plurality of valve insertion horizontal holes in parallel with a superposed surface of the plates is formed on any of the plurality of plates, and the valve insertion horizontal holes house valve bodies of a plurality of drive valves, wherein
the plurality of plates is fixed by the fastening bolt according to claim 18, and
the communication passage of the fastening bolt is disposed in a passage that communicates between a pressure accumulator in the automatic transmission or the continuously variable transmission and an oil pump in the automatic transmission or the continuously variable transmission.
